Europäisches Patentamt

European Patent Office

Office européen des brevets

(11) Publication number: **0 047 125**
**B1**

## EUROPEAN PATENT SPECIFICATION

(45) Date of publication of patent specification: **02.01.86**

(21) Application number: **81303884.1**

(22) Date of filing: **25.08.81**

(51) Int. Cl.⁴: **C 10 L 11/00, C 10 L 5/40, C 10 L 7/02**

(54) Combustible compositions, firelighters, barbeque starters and firelogs.

(30) Priority: **01.09.80 GB 8028162**

(43) Date of publication of application:
**10.03.82 Bulletin 82/10**

(45) Publication of the grant of the patent:
**02.01.86 Bulletin 86/01**

(84) Designated Contracting States:
**AT BE CH DE FR GB IT LI LU NL SE**

(56) References cited:
**EP-A-0 015 699**
**EP-A-0 037 232**
**FR-A-1 555 995**
**US-A- 338 691**
**US-A-4 165 968**

(73) Proprietor: **RECKITT AND COLMAN PRODUCTS LIMITED**
**P.O. Box 26 1-17, Burlington Lane**
**London W4 2RW (GB)**

(72) Inventor: **Fox, Rodney Thomas**
**37, South Street**
**Cottingham North Humberside (GB)**
Inventor: **Coan, Brian**
**59, Smithfield Drive**
**Ferriby Hull (GB)**

(74) Representative: **Hardisty, David Robert et al**
**BOULT, WADE & TENNANT 27 Furnival Street**
**London EC4A IPQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to combustible compositions and includes compositions which in relatively small pieces are useful as firelighters as well as compositions which may be used to make artificial firelogs. The compositions of the invention may also be used as fuel.

Known combustible compositions include those compositions which are used as firelighters, charcoal igniters and artificial fire logs. Certain of these compositions comprise fuel in the form of a wax, gel or paste, optionally filled with organic, combustible solids such as wood waste, (e.g. wood flour or wood shavings).

United States Patent Specification No. 4165968 discloses a gelled alcohol containing expanded perlite for the special purpose of forming a thin surface coating on charcoal briquettes to make them easily lightable. This alcohol gel composition would not be suitable for use in bulk as a firelighter because it would flow during combustion producing a large burning surface area and hence burning for only a short period. The purpose of the expanded perlite in the composition is to give the coating in charcoal a rough surface which acts as a wick to give easy ignition, rapid flame spread and hence an increased rate of fuel consumption.

We have found that the incorporation of inorganic solids into certain compositions which do not flow during combustion, and which therefore are themselves useful as fuel, firelighters or barbeque starters, can produce a decrease in the rate at which the fuel content of the combustible composition is consumed.

The present invention now provides a combustible composition comprising a fuel in the form of a wax or paste having expanded perlite dispersed therein serving to decrease the rate at which the fuel burns on combustion of the composition and optionally a combustible filler material, the composition being such that it does not flow substantially during combustion; provided that when the composition comprises a combustible filler material and the composition is one which has been formed hot, the composition contains from 0.5 to 6% by weight of the expanded perlite.

The fuel in wax or paste form may for instance be an animal, mineral or vegetable wax, or a paste formed by emulsifying an oil in water.

The combustible composition may accordingly comprise a compacted mixture of a combustible organic solid, such as wax, wood waste, and the expanded perlite. The wax which serves to bind such a composition together may be a solid or semi-solid wax. The composition may optionally contain a combustible liquid such as kerosene, distillate, gas oil, white spirit, sump oil or oils of vegetable origin such as may be used in the paints and plastics industries, and/or oil or fats of animal origin. Other fuel materials which may optionally be included from the plastics industry include waste polymers such as atactic polypropylene.

Compositions of the above type may be formed into large pieces suitable as artificial fire logs.

The composition may contain a combustible organic solid such as wood waste or peat or plastics waste. Waxes may be incorporated into such compositions to act as additional fuel and in some cases to help bind the composition. Conventional products of this general type but lacking the expanded perlite characteristic of the invention are known as "brown firelighters".

An example of composition according to the invention may comprise the expanded perlite and a water-immiscible fuel, eg hydrocarbon oil or other oil, emulsified with water to form a stiff paste, eg by the action of suitable emulsifying agents optionally in conjunction with application of high shear which has the effect of thickening the emulsion. Such an emulsion serves to provide the fuel in paste form.

Examples of inorganic, non-combustible particulate materials which may be used in conjunction with the expanded perlite are chalk, china clay, diatomaceous earth, perlite rock, sand, FILLITE which is a particulate solid separated from boiler ash and has the form of microspheres, vermiculite, talc, and exfoliated vermiculite.

Preferably, such an inorganic non-combustible particulate solid has low bulk density, for example less than 0.4 g cm$^{-3}$.

Preferably, the density of any such inorganic non-combustible particulate solid is similar to or less than that of the liquefiable fuel component. More preferably, the density of the solid is much less than that of the liquefiable fuel component.

Preferably, the particles of the expanded perlite and other inorganic non-combustible solids if present are impermeable to liquids, that is to say, the liquefiable fuel cannot completely penetrate the interior of the particles. This may be achieved by the use of solids that have a liquid-impermeable "skin" such as FILLITE, or by coating the particulate material with a barrier material which may be a polymeric coating composition such as an alkyd resin or nitro cellulose or a heavy metal soap, a silicone, or a silicate, or a viscous non-drying oil or a drying oil.

In order to minimise the opportunity for the expanded perlite to absorb liquid fuel it is preferred that the expanded perlite be added to the other ingredients shortly before the composition becomes too stiff to allow the introduction of the perlite.

It is preferred that the expanded perlite be of relatively small particle size, e.g. about 0.8 mm or less and of relatively low bulk density, e.g. from 40 to 60 kg/m$^3$. Johns Manville grade EUP/100/28 is of this preferred type.

The amount of expanded perlite that may be included is up to 12% w/w of the total composition. Preferably, the amount is less than 8% w/w and 1% to 6% w/w is especially preferred.

The combustible composition may contain, in addition to the expanded perlite a proportion of combustible particulate material uniformly distributed therein. Typical of such materials are:— wood wastes including wood flour, wood shavings or comminuted compressed wood wastes; peat in dried native or dried and comminuted, precompressed form; coal fines; lignite; waste paper or cardboard; comminuted plant material such as comminuted compressed wastes from grain crops optionally partly hydrolysed, seeds such as linseed, rapeseed and millet which may be used whole or crushed, including oil-mill waste, or seed hulls such as coconut husk, walnut shells and peach stones preferably in comminuted form; or mixtures thereof. All things which contribute significantly to the calorific value of the end product be it firelighter, barbeque starter or artificial firelog may be used.

Generally, the proportion of such combustible solid material in the compositions of the invention will not exceed 80% by weight and more preferably will not be more than 70% by weight.

Preferably, the amount of expanded perlite included does not exceed 12% w/w based on the final product. In those cases where a particulate organic combustible material is included, the amount of inorganic solid preferably does not exceed 8% w/w by weight of the final composition and is preferably 0.5% to 6% w/w.

The composition according to the invention may generally be used as firelighters or charcoal igniters. Those compositions which are not self-supporting solids may be put up in sachets to provide unit doses or may be filled into collapsible tubes for dispensing in such doses as are desired.

Those compositions possessing sufficient structural integrity may suitably be made into artificial firelogs.

The composition of the invention may be prepared in a variety of ways depending upon whether the final product is to be used as an ignition product for fires on the one hand or barbeque starters on the other hand or an artificial fire log. The manufacture of such product types is well understood and the incorporation of the expanded perlite may be effected by mixing at a suitable stage depending upon whether the final composition is to include a mechanical mixture of fuel and solid organic combustible material or a brown firelighter type of product.

If the final product is to be of the wax type, the expanded perlite, and any other inorganic materials, optionally precoated with surface treatment material, may be admixed together with or separately from the solid organic combustible material into the fuel with stirring usually at slightly elevated temperature especially in those cases where a relatively high melting point fuel is employed. In some cases it may be suitable to slurry the inorganic material optionally admixed with the fuel in liquid form and introduce them as fluid into the final blend.

In the case of a brown firelighter type of final product where, for example kerosene or other combustible liquid is emulsified with water optionally using a suitable emulsifying agent to achieve a shape-retaining final solid that may be cut into blocks or moulded, the expanded perlite may be mixed with the fuel component. Alternatively, the expanded perlite is mixed with the emulsion whilst it is still in a sufficiently fluid state after formation of the emulsion. The freshly formed composition may be allowed to stand until of satisfactory consistency if it is desired to be cut into blocks subsequently. Alternatively, the mixture may be moulded into individual blocks and wrapped when set to handlable consistency.

Another means of presenting the product is in sachets, i.e., sealed envelopes which closely fit the outer surfaces of the blocks when set.

Where such a composition is to be used as an artificial fire log suitably large pieces may be moulded as by extrusion or compaction and optionally wrapped.

Combustible compositions of the present invention are preferably match ignitable.

The invention will now be illustrated by the following examples in which parts are by weight:—

Example 1

A typical artificial fire log composition was prepared by melting 72 parts SLACKWAX 30 and admixing with slow stirring 28 parts of a mixture of sawdust (26 parts) and expanded Perlite EUP/100/28 (2 parts) until uniform distribution was achieved. SLACKWAX is a Registered Trade Mark.

The mixture was poured into a mould, lightly tamped with a pallet knife and left overnight to harden. For convenience burning tests were conducted on fingers, cut from the moulded block when cold, each weighing about 40 g and sized 30.5×62.5×28mm. A control lacking perlite was run.

|  | Control |  |
| --- | --- | --- |
| Level of perlite present | None | 2% |
| Mean finger weight | 44.6 g | 37.2 g |
| Mean observed burning time | 19.6 min | 18.8 min |
| %age slackwax in sample | 72.0 | 70.0 |
| Weight slackwax per g of finger | 32.11 g | 26.04 g |
| Burning time per g of slackwax | 0.61 min | 0.72 min |

The inclusion of this grade of expanded perlite at 2% w/w level was found to reduce the density of the product by about 16% compared with the control; the observed burning time is not significantly impaired, however, the efficiency of utilisation slackwax is improved. Both products tended to drip slackwax slightly and were difficult to ignite with a match.

A consideration of the above example shows that the compositions of the invention tested exhibit various surprising advantages over the controls.

First it has been found that a large reduction in density of the combustible composition may result from the addition of expanded perlite. Thus, in the case of a wax/wood waste composition up to 9% reduction in density occurs in blocks suitable for artificial fire logs and containing little or no kerosene whilst the observed burn time (duration of burn in minutes per unit size of block of material) seems not to be reduced indicating an improvement in the efficiency in the utilization of the liquefiable fuel per unit-volume of product.

The reduction in density is in itself advantageous since a bigger product may be produced without using extra fuel or the existing size of product may be maintained with a fuel saving.

Whilst in many cases the incorporation of expanded perlite improves the efficiency of burning of the fuel, it is at present not clear how this effect is achieved. It could be due to the structure of the expanded perlite. In the case of the more solid compositions, the perlite may merely provide a more or less rigid structure within a burning block preventing the slight shrinkage effect which normally accompanies collapse of the block during burning, with consequent improvement of burning. Solid blocks exemplified above show an efficiency of fuel burning which tends towards the efficiency of so-called "white firelighter" in burning liquefiable fuel.

"White firelighter" is the term usually used for a firelighter composition having kerosine in liquid form encapsulated in tiny pores in a matrix of solid resin.

Again it may be due to a heat insulative effect of the perlite causing reduced heat flow to the fuel in the interior of the block resulting in a reduced rate of vaporisation at the burning surface, or some combination of these effects.

Our copending European Patent Application No. 81303883.3 (EP—A—47124) describes and claims a block of a combustible composition comprising a gelled liquid or liquefiable fuel characterized in that the composition has expanded perlite dispersed therein.

Our copending European Patent Application No. 81303880.9 (EP—A—47123) describes and claims a combustible composition which does not flow substantially during combustion comprising a fuel in the form of a wax, gel, or paste and characterized in that there is dispersed therein an inorganic, particulate, non-combustible solid serving to decrease the rate at which the fuel burns on combustion of the composition and optionally a combustible filler material; and wherein the composition contains from 1 to 6% by weight of the inorganic, particulate, non-combustible solid which is chalk, china clay, diatomaceous earth, perlite rock, sand, inorganic microspheres produced from boiler ash, vermiculite, talc or expanded vermiculite provided that the fuel is other than kerosene thickened with soap.

## Claims

1. A combustible composition which does not flow substantially during combustion comprising a fuel in the form of a wax or paste and characterised in that there is expanded perlite dispersed therein serving to decrease the rate at which the fuel burns on combustion of the composition, and optionally a combustible filler material, provided that when the composition comprises a combustible filler material and the composition is one which has been formed hot, the composition contains from 0.5 to 6% by weight of the expanded perlite.

2. A combustible composition as claimed in Claim 1 further characterised in that the composition comprises a compacted mixture of a combustible organic solid, wax and expanded perlite.

3. A combustible composition as claimed in Claim 2 further characterised by comprising a combustible liquid.

4. A combustible composition as described in Claim 2 or Claim 3 further characterized in that the said combustible, organic solid is wood waste, peat, waste plastics, coal fines, lignite, comminuted waste paper or cardboard or comminuted plant material.

5. A combustible composition as claimed in claim 1 and further characterised by comprising expanded perlite and a water immiscible fuel emulsified with water to form a stiff paste.

6. A combustible composition as claimed in any preceding claim further characterised in that the expanded perlite has a bulk density of from 40 to 60 kg/m$^3$ and has a particle size of 0.8 mm or less.

7. A combustible composition as claimed in any preceding claim further characterised by containing from 1 to 6% by weight of the expanded perlite.

8. A firelighter or barbeque starter comprising a block of a combustible composition as claimed in any preceding claim, a sachet of a combustible composition as claimed in any preceding claim or a tube containing a combustible composition as claimed in any preceding claim.

9. An artificial fire log comprising a combustible composition as claimed in any one of claims 1 to 7.

## Patentansprüche

1. Eine brennbare Zusammensetzung, die im wesentlichen während der Verbrennung nicht fließt, umd die einen Brennstoff in Form von Wachs oder Paste enthält, dadurch gekennzeichnet, daß darin expandierter Perlit dispergiert enthalten ist um die Geschwindigkeit mit der der Brennstoff während der Verbrennung der Zusammensetzung brennt zu verringern und daß sie wahlweise ein brennbares Füllmaterial enthält, unter der Vorraussetzung, daß falls die Zusammensetzung ein brennbares Fullmaterial enthält und die Zusammensetzung heiß geformt wurde, die Zusammensetzung 0,5 bis 6 Gew.% an expandiertem Perlit enthält.

2. Eine brennbare Zusammensetzung nach Anspruch 1, dadurch gekennzeichnet, daß die Zusammensetzung eine kompakte Mischung eines brennbaren organischen Feststoffes, Wachs und expandiertem Perlit enthält.

3. Eine brennbare Zusammensetzung nach Anspruch 2, dadurch gekennzeichnet, daß sie eine brennbare Flüssigkeit enthält.

4. Eine brennbare Zusammensetzung nach Anspruch 2 oder 3, dadurch gekennzeichnet, daß der besagte brennbare organische Feststoff Holzabfälle, Torf, Kunststoffabfälle, Feinkohle, Lignit, zerkleinertes Altpapier oder Karton oder zerkleinertes Pflanzenmaterial ist.

5. Eine brennbare Zusammensetzung nach Anspruch 1, dadurch gekennzeichnet, daß sie expandierten Perlit und einen mit Wasser unmischbaren Brennstoff in mit Wasser emulgierter Form enthält um eine feste Paste zu bilden.

6. Eine brennbare Zusammensetzung nach einem der vorhergehenden Ansprüche, dadurch gekennzeichnet, daß der expandierte Perlit eine Schüttdichte von 40 bis 60 kg/m$^3$ und eine Teichengröße von 0.8 mm und weinger hat.

7. Eine brennbare Zusammensetzung nach einem der vorhergehanden Ansprüche, dadurch gekennzeichnet, daß sie 1 bis 6 Gew.-% an expandiertem Perlit enthält.

8. Ein Feueranzünder oder ein Grillanzünder, dadurch gekennzeichnet, daß er einen Block aus einer brennbaren Zusammensetzung nach einem der vorhergehenden Ansprüchen, ein Sachet aus einer brennbaren Zusammensetzung nach einem der Vorhergehenden Anspruche oder aus einer brennbaren Zusammensetzung nach einem der vorhergehenden Ansprüche bestehenden Röhre enthält.

9. Ein künstlicher Feuerscheit, dadurch gekennzeichnet, daß er eine brennbare Zusammensetzung nach einem der Ansprüche 1 bis 7 enthält.

**Revendications**

1. Une composition combustible ne coulant pratiquement pas pendant sa combustion, contenant un combustible sous forme de cire ou de pâte et caractérisée par le fait qu'elle contient, à l'état dispersé, de la perlite expansée qui sert à diminuer la vitesse à laquelle le combustible brûle lors de la combustion de la composition, et, facultativement, une matière de charge combustible, et que lorsqu'elle contient une matière de charge combustible et a été formée à chaud, elle contient de 0,5 à 6,0% en poids de perlite expansée.

2. Une composition combustible telle que revendiquée dans la revendication 1, caractérisée en outre par le fait qu'elle contient un mélange comprimé d'un solide organique combustible, de cire, et de perlite expansée.

3. Une composition combustible telle que revendiquée dans la revendication 2, caractérisée en outre en ce qu'elle contient un liquide combustible.

4. Une composition combustible telle que décrite dans la revendication 2 et la revendication 3, caractérisée en outre en ce que le solide organique combustible est des déchets de bois, de la tourbe, des déchets de plastique, des fines de charbons, du lignite, des vieux papiers ou vieux cartons finement fragmentés ou de la matière végétale finement fragmentée.

5. Une composition combustible telle que revendiquée dans la revendication 1, caractérisée en outre en ce qu'elle contient de la perlite expansée et un combustible non miscible à l'eau émulsionné avec de l'eau pour former une pâte épaisse.

6. Une composition combustible telle que revendiqué dans l'une quelconque des revendications précédentes, caractérisée en outre en ce que la perlite expansée a une masse volumique apparente de 40 à 60 kg/m$^3$ et une grosseur de particules de 0,8 mm ou moins.

7. Une composition combustible telle que revendiquée dans l'une quelconque des revendications précédentes, caractérisée en outre en ce qu'elle contient de 1 à 6% en poids de perlite expansée.

8. Allume-feu ou allumeur de barbecue constitué d'un bloc d'une composition combustible telle que revendiquée dans l'une quelconque des revendications précédentes, d'un sachet d'une composition combustible selon l'une des revendications précédentes ou d'un tube contenant une composition combustible selon l'une des revendications précédentes.

9. Bûche artificielle constituée d'une composition combustible telle que revendiquée dans l'une quelconque des revendications 1 à 7.